# NEW EUROPEAN PATENT SPECIFICATION

(11) **EP 0 680 253 B2**
(45) Date of publication and mention of the opposition decision: **17.05.2000**
(45) Mention of the grant of the patent: 09.10.1996
(21) Application number: 94905000.9
(22) Date of filing: 19.01.1994
(51) Int. Cl.: A01K 1/00, A61L 9/14, B05B 7/28

(54) **METHOD AND APPARATUS FOR ATOMIZING SPRAYING OF A MIXTURE OF OIL AND WATER TO FORM A LIQUID MIST, ESPECIALLY WITH A VIEW TO LAYING DUST IN ANIMAL STABLES**
VERFAHREN UND VORRICHTUNG ZUR ZERSTÄUBUNG EINER MISCHUNG VON ÖL UND WASSER ZUR BILDUNG EINES FLÜSSIGEN NEBELS, INSBESONDERE IM HINBLICK AUF DIE STAUBFIXIERUNG IN TIERSTÄLLEN
PROCEDE ET APPAREIL POUR ATOMISER/PULVERISER UN MELANGE D'HUILE ET D'EAU POUR FORMER UN BROUILLARD LIQUIDE, EN PARTICULIER POUR FAIRE TOMBER LA POUSSIERE DANS LES BATIMENTS ABRITANT DES ANIMAUX

(30) Priority: 20.01.1993 DK 6793
(43) Date of publication of application: 08.11.1995
(73) Proprietor: KEW INDUSTRI A/S, 9560 Hadsund (DK)
(72) Inventor: LAURSEN, Bent, DK-9560 Hadsund (DK)
(74) Representative: Roerboel, Leif
(86) International application number: DK9400033
(87) International publication number: WO9416554

(56) References cited:
- WO-A-91/16138
- DE-A- 2 816 752
- Brochure incoming to PRV 92-03-09, ALEKEW dammbindningssystem, "Alekew dammbindningssystem plockar ner dammet pa jorden".
- LANTMANNEN, Vol. 13-14, 1991, "Rapsolja binder dammet", page 36.

## Description

### TECHNICAL FIELD

The present invention relates to a method of the kind set forth in the preamble of claim 1.

### BACKGROUND ART

From the publication "Orientering nr. 76" ("Information No. 76") of December 1991 from the Danish Governmental Agrotechnical Experimental Station, Bygholm, Horsens, Denmark, it is known to bind or lay flying dust in animal stables by spraying out a liquid mist of the kind referred to above. The process of mixing oil and water has until now been carried out by first forming an oil-in-water emulsion with a considerably greater proportion of oil than required for the liquid mist itself, upon which this emulsion is diluted with a suitable amount of water and sprayed out through e.g. atomizing nozzles. To make it possible to form an emulsion of a merely reasonable stability, it has up to now been necessary to use emulsifiers, but this may entail a risk of long-time effects on the respiratory organs of the animals - and also of the personnel. Another disadvantage is that the emulsion may at times break down, e.g. in connection with prolonged intervals between the individual spraying operations, causing the formation of lumps that may cause clogging, not least of the atomizing nozzles. Further, after prolonged storage of the concentrated emulsion, the consistency of which may be compared to thin mayonnaise or the like, problems may arise due to microbial growth and the ensuing risk of the formation of toxic substances.

### DISCLOSURE OF THE INVENTION

On the background of the above, it is the object of the present invention to provide a method of the kind refered to initially, that does not suffer from the disadvantages and risks referred to above, and this object is achieved by proceeding as set forth in the characterizing clause of claim 1. Since this method does not imply the use of any previously prepared emulsion, the associated disadvantages in the form of a risk of breakdown of the emulsion and microbial growth disappear automatically; as is well known, oil - in the present case normally vegetable oil, e.g. rape seed oil - may be stored for a considerably longer time than an emulsion, without the occurrence of any microbial growth or other deterioration of importance.

Since the quantity of oil used is considerably less than the quantity of water used, it is preferred, according to a first embodiment of the method according to the invention, to proceed as set forth in claim 2. If so, it is preferred according to a further development of this embodiment to proceed as set forth in claim 3. In this manner, it is possible to achieve partly a highly effective mixing of the two components and atomizing of the mixture, partly a possibility of utilizing pumping equipment in many cases already available, viz. in the form of the pumping equipment in a high-pressure cleaner - as is well known, an apparatus for cleaning surfaces by means of liquid jets ejected under high pressure.

The present invention also relates to an apparatus for use in carrying out the method according to the invention, and this apparatus is characterized by the features set forth in the characterizing clause of claim 4. Such an apparatus has proved highly efficient for carrying out the method.

An embodiment, which is very simple and hence in many cases preferred for economic reasons, is set forth in claim 5.

If there is a desire for making it possible to spray liquid mists with varying compositions in different stable sections, the apparatus may according to a modified but somewhat more expensive embodiment be adapted as set forth in claim 6.

### BRIEF DESCRIPTION OF THE DRAWINGS

In the following detailed portion of the present description, the invention will be explained in more detail with reference to the exemplary embodiment of an apparatus for use in carrying out the method according to the invention shown on the drawing,
Figure 1 diagrammatically showing a piggery, in which the apparatus is installed,
Figure 2 likewise diagrammatically showing the most important components of the apparatus and their interconnections, and
Figure 3 showing the injector constituting an important new component of the apparatus shown in Figures 1 and 2.

### DESCRIPTION OF THE PREFERRED EMBODIMENT

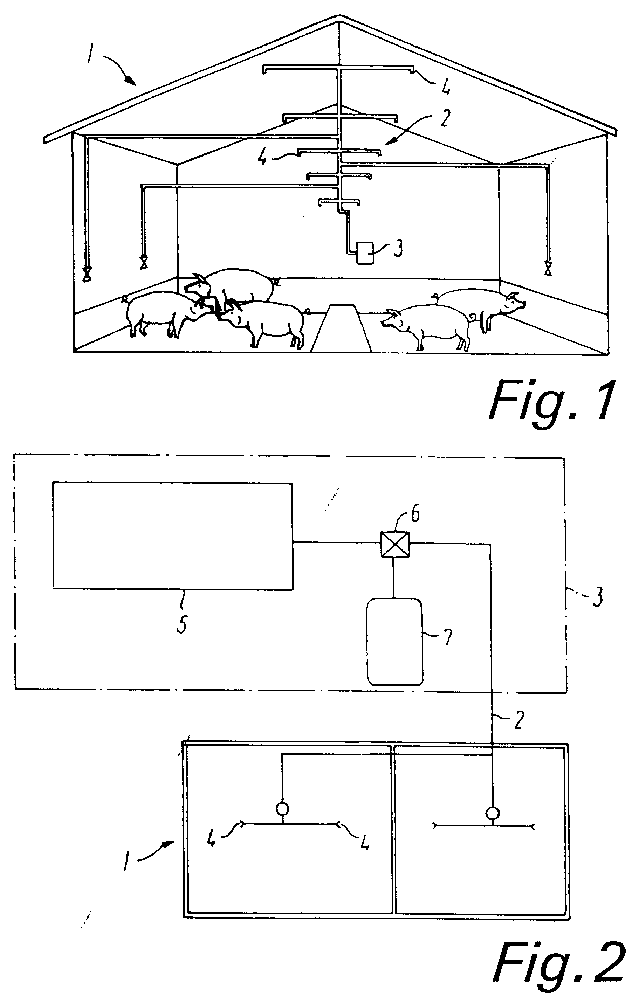

As mentioned above, a piggery 1 is shown in Figure 1. In this piggery, a pipe system 2 is installed, the inlet side of which is connected to a supply unit 3, and the outlet of which consists of a number of atomizing nozzles 4.

As will be evident from Figure 2, the supply unit 3 consists of a high-pressure pump unit 5, an injector 6, the drive-nozzle inlet of which is connected to the outlet of the pump unit 5, and an oil reservoir 7 connected to the suction inlet in the injector 6, the latter's outlet being connected to the pipe system 2, which in the piggery 1 supplies liquid from the injector 6 to the individual atomizing nozzles 4, said liquid in the first instance being drawn in by the pump unit 5, e.g. in the form of water from the waterworks of the district concerned.

The high-pressure pump unit 5 may comprise any pump being able to deliver water at a pressure of the order of magnitude 100-200 bar and in a quantity per unit time sufficient to form the desired quantity of liquid mist. It has been found that a so-called high-pressure cleaner can meet these conditions.

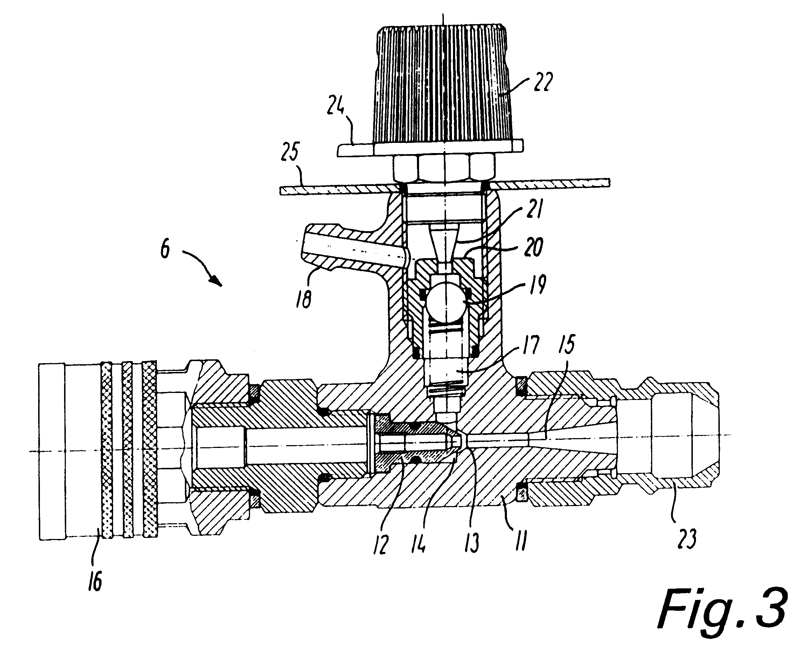

The injector shown in Figure 3 consists in a manner known in principle of an injector housing 11, in which various spaces and canals are provided, viz.
- a drive nozzle 12 opening into a drive-nozzle canal 13,
- a suction chamber 14 surrounding the drive-nozzle canal 13, and
- an outlet 15 aligned with the drive-nozzle canal 13 and, at the upstream end to the left in the drawing, in direct communication with the suction chamber 14.

The upstream end of the drive nozzle 12 is, by means of a quick-coupling female part 16, adapted to be connected to the high-pressure pump unit 5 through a pressure hose (not shown).

Through a suction-chamber inlet 17, the suction chamber 14 of the injector is connected to a hose nipple 18 adapted to be connected through a hose (not shown) to the oil reservoir 7, the latter containing the oil to be sprayed out as a component of the liquid mist.

In a manner known in principle, a non-return valve 19 adapted to open in the inlet direction is placed between the suction-chamber inlet 17 and the hose nipple 18 in order to prevent liquid from flowing back through the latter.

Also associated with the non-return valve 19 is a throttling valve consisting of a valve seat 20 and a cone 21, of which the latter may be adjusted relative to the valve seat 20 by means of a rotatable knob 22, thus making it possible to adjust the inflow of oil.

The outlet 15 is directly connected to a quick-coupling male part 23 with a view to being connected to the pipe system 2.

The atomizing nozzles 4 may be of any suitable type, e.g. in the form of a turbulence-chamber nozzle or a deflector nozzle as illustrated in a diagrammatic sketch on page 12 in "Orientering nr. 76" referred to initially.

When a liquid mist consisting of water with a small proportion of oil is to be sprayed out, the high-pressure pump unit 5 is started, so that the injector 6 in a known manner will aspirate oil from the oil reservoir 7 in a quantity per unit time depending i.a. on the adjustment of the cone 21 relative to the valve seat 20. Now, a liquid mist consisting of water with a small proportion of oil will be sprayed out through the atomizing nozzles 4.

During the initial running-in of the plant, it is possible to adjust the rotatable knob 22 to achieve the mixture proportion desired, which may be checked by taking samples of the mist having been sprayed out, upon which the rotational position of the knob 22 may be noted by means of a pointer 24 cooperating with a scale (not visible in the drawing) attached to a dial 25.

If it is desired to spray liquid mist with different compositions in different sections of the piggery, possibly by adding medicines, the arrangement with one single common injector with associated oil reservoir may be replaced by a number of injectors, each having its own oil reservoir. This alternative is not shown in the drawing.

### LIST OF PARTS

- 1: Piggery
- 2: Pipe system
- 3: Supply unit
- 4: Atomizing nozzle
- 5: High-pressure pump unit
- 6: Injector
- 7: Oil reservoir
- 11: Injector housing
- 12: Drive nozzle
- 13: Drive-nozzle canal
- 14: Suction chamber
- 15: Outlet
- 16: Quick-coupling female part
- 17: Suction-chamber inlet
- 18: Hose nipple
- 19: Non-return valve
- 20: Valve seat
- 21: Cone
- 22: Knob (rotatable)
- 23: Quick-coupling male part
- 24: Pointer
- 25: Dial

## Claims

1. Method of atomizing spraying of a mixture of oil and water to form a liquid mist, expecially with a view to laying dust in animal stables, **characterized in** that the oil and the water are supplied indivually to at least one injector, in which they are mixed before being sprayed out.

2. Method according to claim 1, **characterized in** that the water is introduced into the drive-nozzle inlet of the injector, while the oil is introduced into the suction inlet of the injector.

3. Method according to claim 2, **characterized in** that the water is supplied to the drive-nozzle inlet of the injector at a pressure of the order of magnitude of 100-200 bar.

4. Apparatus for use when carrying out the method according to any one or any of the claims 1-3, **characterized by** comprising at least one injector of the kind comprising a drive-nozzle inlet (16) connected to the drive nozzle (12) of the injector, a suction inlet (17) connected to the suction chamber (14) of the injector, as well as an outlet (15) placed in alignment with the nozzle channel (13) of the drive nozzle (12) and at its upstream end connected to the suction chamber, said drive-nozzle inlet (16) being adapted to be connected to a source of water at high pressure, e.g. of the order of magnitude of 100-200 bar, and the suction inlet (17) being adapted to be connected to a source of oil at a lower pressure, a member (23) adapted to be connected to one or a number of atomizing nozzles (4) or to have such nozzles attached to it being placed in continuation of the outlet (15), further comprising an adjustable throttling valve (20,21) being placed in the suction inlet (17) or the latter's supply canal in each injector.

5. Apparatus according to claim 4 or 5, **characterized by** comprising equipment common to a number of spraying-out locations (4) and consisting of
a) a high-pressure water source (5),
b) an oil reservoir (7), and
c) an injector (6),
c1) the drive-nozzle inlet (16) of which is connected to the high-pressure water source (5),
c2) the suction inlet (18) of which is connected to the oil reservoir (7), and
c3) the outlet of which is connected to a pipe system (2) connected to said spraying-out locations (4).

6. Apparatus according to claim 4 or 5, **characterized by** comprising common equipment for a number of spraying-out locations (4) and consisting of
a) a high-pressure water source, and
b) at least two injectors,
b1) the drive-nozzle inlets of which are connected to said high-pressure water source,
b2) the outlets of which are connected to at least one spraying-out location, and
b3) the suction inlets of which are connected to or adapted to be connected to at least one reservoir containing oil and possibly other additives.

## Patentansprüche

1. Verfahren zum Zerstäubungs-Versprühen einer Mischung von Öl und Wasser zur Bildung eines Flüssigkeitsnebels, insbesondere mit Hinblick auf die Bindung von Staub in Viehställen, dadurch gekennzeichnet, dass das Öl und das Wasser getrennt zumindest einem Injektor zugeführt werden, worin sie vor dem Ausspritzen vermischt werden.

2. Verfahren gemäss Anspruch 1, dadurch gekennzeichnet, dass das Wasser in den Einlass der Treibdüse des Injektors eingeführt wird, während das Öl in den Ansaugeinlass des Injektors eingeführt wird.

3. Verfahren gemäss Anspruch 2, dadurch gekennzeichnet, dass das Wasser dem Einlass der Treibdüse des Injektors mit einem Druck in der Grössenordnung von 100-200 bar zugeführt wird.

4. Apparat zur Anwendung bei der Durchführung des Verfahrens gemäss einem jeden der Ansprüche 1-3, dadurch gekennzeichnet, dass er zumindest einen Injektor derjenigen Art, der einen mit der Treibdüse (12) des Injektors verbundenen Treibdüseneinlass (16), einen mit der Saugkammer (14) des Injektors verbundenen Saugeinlass (17), sowie einen in Linie mit dem Düsenkanal (13) der Treibdüse (12) gelegenen und an seinem Zulaufende mit der Saugkammer verbundenen Auslass (15) aufweist, wobei der Treibdüseneinlass (16) zum Anschluss an eine Hochdruckquelle für Wasser in beispielsweise einer Grössenordnung von 100-200 bar, und der Saugeinlass (17) zum Anschluss an eine Quelle für Öl mit einem kleineren Druck eingerichtet ist, und wobei ein Organ (23) zur Verbindung mit einem oder einer Mehrzahl von Zerstäubungsdüsen (4) oder zur Zuordnung solcher Düsen in Fortsetzung des Auslasses (15) vorgesehen ist, wobei ein einstellbares Drosselventil (20, 21), das in dem Saugeinlass (17) oder dem Versorgungskanal desselben in jedem Injektor angebracht ist.

5. Apparat gemäss Anspruch 4 oder 5, dadurch gekennzeichnet, dass er eine für eine Mehrzahl von Versprühungsstellen (4) gemeinsame Ausrüstung aufweist, bestehend aus
a) einer Quelle (15) für Hochdruckwasser,
b) einem Ölbehälter (7),
c) einem Injektor (6),
c1) dessen Treibdüseneinlass (16) mit der Quelle (5) für Hochdruckwasser verbunden ist,
c2) dessen Saugeinlass (17) mit dem Ölbehälter verbunden ist, und
c3) dessen Auslass mit einem mit den Versprühungsstellen (4) verbundenen Rohrsystem (2) verbunden ist.

6. Apparat gemäss Anspruch 4 oder 5, dadurch gekennzeichnet, dass er eine für eine Mehrzahl von Versprühungsstellen (4) gemeinsame Ausrüstung aufweist, bestehend aus
a) einer Quelle für Hochdruckwasser, und
b) zumindest zwei Injektoren,
b1) deren Treibdüseneinlässe mit der Quelle für Hochdruckwasser verbunden sind,
b2) deren Auslässe mit mindestens einer Versprühungsstelle (4) verbunden sind, und
b3) deren Saugeinlässe verbunden, oder zu einer Verbindung eingerichtet sind mit mindestens einem Öl und mögliche andere Additive enthaltenden Behälter.

## Revendications

1. Procédé pour pulvériser par atomisation un mélange d'huile et d'eau et pour former un brouillard liquide, notamment le but de précipiter la poussière dans des étables, caractérisé en ce que l'huile et l'eau sont amenées séparément à au moins un injecteur, dans lequel elles sont mélangées avant d'être projetées par pulvérisation.

2. Procédé selon la revendication 1, caractérisé en ce que l'eau est amenée dans l'entrée de buse motrice de l'injecteur, tandis que l'huile est introduite dans l'entrée aspirante de l'injecteur.

3. Prodédé selon la revendication 2, caractérisé en ce que l'eau est amenée à l'entrée de buse motrice de l'injecteur sous une pression d'un ordre de grandeur de 100 à 200 bars.

4. Dispositif destiné à être utilisé pour mettre en oeuvre le procédé selon l'une quelconque des revendications 1 à 3, caractérisé en ce qu'il comprend au moins un injecteur du type comprenant une entrée de buse motrice (16) connectée à la buse motrice (12) de l'injecteur, une entrée aspirante (17) reliée à la chambre d'aspiration (14) de l'injecteur ainsi qu'une sortie (15) placée dans l'alignement du canal de tuyère (13) de la buse motrice (12) et dont l'extrémité amont est reliée à la chambre d'aspiration, cette entrée de buse motrice (16) étant susceptible d'être reliée à une source d'eau sous pression élevée, c'est-à-dire de l'ordre de 100 à 200 bars, et l'entrée aspirante (17) peut être reliée à une source d'huile sous pression faible, un organe (23) conçu pour être raccorder à une ou plusieurs tuyères d'atomisation (4) ou auquel sont reliées de telles tuyères placées en alignement avec la sortie (15), et qu'il comprend une vanne d'étranglement réglable (20, 21) placée dans l'entrée aspirante (17) ou dans le canal d'alimentation de cette dernière dans chaque injecteur.

5. Dispositif selon la revendication 4 ou 5, caractérisé en ce qu'il comprend un appareillage commun à un certain nombre d'emplacements (4) de pulvérisations, lequel dispositif comprend:
a) une source d'eau sous pression élevée (5),
b) un réservoir d'huile (7), et
c) un injecteur (6),
c1) dont l'entrée (16) de la buse motrice est reliée à la source d'eau sous pression élevée (5),
c2) dont l'entrée aspirante (18) est reliée au réservoir d'huile (7), et
c3) dont la sortie est reliée à un système de conduits (2) raccordés auxdits emplacements de pulvérisation (4).

6. Dispositif selon la revendication 4 ou 5, caractérisé en ce qu'il comprend un appareillage commun à un certain nombre d'emplacements (4) de pulvérisations, et consistant en:
a) une source d'eau sous pression élevée, et
b) au moins deux injecteurs,
b1) dont les entrées de buse motrice sont raccordés à ladite source d'eau sous pression élevée,
b2) dont les sorties sont raccordées à au moins un emplacement de pulvérisation, et
b3) dont les entrées aspirante sont raccordées ou conçues pour être raccordées à au moins un réservoir contenant de l'huile et éventuellement d'autres additifs.
